# DEMANDE DE BREVET EUROPEEN

(11) **EP 3 499 673 A1**
(43) Date de publication de la demande: **19.06.2019**
(21) Numéro de dépôt: 18210463.8
(22) Date de dépôt: 05.12.2018
(51) Int. Cl.: H02J 3/24, G05F 1/44

(54) **APPAREIL ÉLECTRIQUE À RÉSISTANCE APPARENTE NÉGATIVE PRÉSENTANT UN MODE SUBSIDIAIRE**

(30) Priorité: 15.12.2017 FR 1762218
(71) Demandeur: Commissariat à l'Energie Atomique et aux Energies Alternatives, 75015 Paris (FR)
(72) Inventeur: BERSENEFF, Boris, 38700 LA TRONCHE (FR); CHATROUX, Daniel, 38470 TECHE (FR)
(74) Mandataire: GIE Innovation Competence Group

(57) **Abrégé**

Appareil électrique (1) à résistance apparente négative comportant :
- une entrée de puissance (2) ;
- une sortie de puissance (13) ;
- un dispositif électronique de commande (4) adapté à alimenter à puissance constante ou à courant constant un consommateur de puissance électrique (3) selon un mode nominal, le dispositif électronique de commande (4) fournissant au consommateur de puissance électrique (3) un courant qui varie dans le sens inverse d'une variation de la tension du réseau électrique ;
- un dispositif de détection de tension (5) adapté à détecter une variation prédéterminée de la tension du réseau électrique ;
- un dispositif de régulation subsidiaire (10) qui est adapté, lorsque le dispositif de détection (5) détecte ladite variation, à piloter le dispositif électronique de commande (4) dans un mode subsidiaire pour alimenter le consommateur de puissance électrique (3) avec un courant qui varie dans le même sens que la variation de la tension détectée du réseau électrique.

## Description

L'invention concerne le domaine des appareils électriques et vise plus particulièrement un appareil électrique à résistance apparente négative, par exemple destiné à alimenter à puissance constante ou à courant constant un consommateur de puissance électrique, ainsi qu'un procédé de commande d'un tel appareil électrique.

Un tel appareil électrique est destiné à être relié d'une part à un consommateur de puissance électrique et d'autre part à un réseau électrique pour son alimentation. Les réseaux électriques, qui alimentent aussi bien les particuliers que les industries, sont des systèmes complexes dont une caractéristique fondamentale est la stabilité en tension. La stabilité en tension d'un réseau électrique est sa capacité à maintenir des niveaux de tension acceptables après avoir été soumis à des perturbations telles que, par exemple, une augmentation de la charge connectée au réseau. Un réseau électrique entre dans un état d'instabilité en tension quand une perturbation, par exemple une augmentation de la charge ou tout autre phénomène, entraîne une chute de tension progressive et incontrôlable (avalanche de tension). Les composants et appareils électriques connectés au réseau électrique peuvent améliorer la stabilité en tension du réseau, ou au contraire, la dégrader.

L'invention a pour but d'améliorer les appareils électriques de l'art antérieur en proposant un appareil électrique qui améliore la stabilité en tension du réseau électrique sur lequel il est connecté.

À cet effet, l'invention vise un appareil électrique à résistance apparente négative comportant :
- une entrée de puissance pour sa liaison à un réseau électrique ;
- une sortie de puissance pour sa liaison à un consommateur de puissance électrique ; et
- un dispositif électronique de commande adapté à alimenter à puissance constante ou à courant constant le consommateur de puissance électrique selon un mode nominal, le dispositif électronique de commande fournissant au consommateur de puissance électrique un courant qui varie dans le sens inverse d'une variation de la tension du réseau électrique. L'appareil comporte également :

- un dispositif de détection de tension adapté à détecter une variation prédéterminée de la tension du réseau électrique ;
- un dispositif de régulation subsidiaire qui est adapté, lorsque le dispositif de détection détecte ladite variation, à piloter le dispositif électronique de commande dans un mode subsidiaire pour alimenter le consommateur de puissance électrique avec un courant qui varie dans le même sens que la variation de la tension détectée du réseau électrique.

De préférence, le dispositif de régulation subsidiaire est adapté, après l'alimentation du consommateur de puissance électrique avec un courant qui varie dans le même sens que la variation de la tension détectée, à maintenir le mode subsidiaire pendant une durée prédéterminée.

Dans la description et les revendications, la résistance apparente d'un appareil est définie comme le rapport entre la variation de tension aux bornes de cet appareil et la variation de courant qui traverse cet appareil.

Ainsi, un appareil à résistance apparente positive est un appareil qui a tendance à consommer moins de courant lorsque la tension à ses bornes diminue et qui a tendance à consommer plus de courant lorsque la tension à ses bornes augmente. C'est le cas par exemple des appareils de chauffage de type convecteur, où la chaleur est générée par un élément chauffant résistif, et qui travaillent à impédance constante.

Un appareil électrique à résistance apparente négative est un appareil qui a tendance à consommer soit un courant constant soit plus de courant, lorsque la tension à ses bornes diminue et qui a tendance à consommer soit un courant constant soit moins de courant, lorsque la tension à ses bornes augmente. Autrement dit, un appareil à résistance apparente négative est un appareil travaillant à puissance constante ou à courant constant. C'est le cas par exemple de tous les appareils comportant un dispositif électronique de commande adapté à alimenter un consommateur de puissance avec une puissance constante malgré les variations de tension. Ainsi, si la tension du réseau chute, l'appareil augmente sa consommation de courant sur le réseau en proportion, de manière à pouvoir maintenir cette fourniture de puissance constante. Ce comportement est avantageux pour le consommateur de puissance mais peut être dommageable pour la stabilité en tension du réseau.

En ce qui concerne les appareils électriques travaillant à courant constant, une variation de leur tension d'alimentation n'a pas d'impact sur le courant qu'ils consomment, qui reste stable. En théorie, leur résistance apparente est infinie, mais en pratique, leur comportement s'apparente plus à un appareil à résistance apparente négative et leur impact peut également être dommageable pour le réseau électrique sur lequel ils sont raccordés. C'est pourquoi, dans la présente demande de brevet, ces appareils sont également inclus dans la dénomination « appareils à résistance négative ». Leur comportement est également dommageable pour la stabilité du réseau électrique, bien que dans une moindre mesure que celui des appareils travaillant à puissance constante.

De nombreuses alimentations à découpage, par exemple pour des appareils électroniques domestiques, fonctionnent à puissance constante et présentent donc une résistance apparente négative. L'usage de plus en plus répandu de ce type d'alimentation représente un gain en matière de consommation d'énergie et d'efficience, mais a un impact négatif sur la stabilité en tension des réseaux électriques. Par ailleurs, plus la puissance d'un appareil électrique à résistance négative est importante, plus son influence négative sur la stabilité du réseau est importante. C'est le cas notamment des chargeurs de véhicules automobiles qui sont des appareils de forte puissance et à résistance apparente négative et qui, si leur usage est amené à se généraliser à grande échelle, vont représenter une importante source d'instabilité des réseaux électriques.

En effet, lorsqu'une perturbation du réseau électrique entraine une baisse de tension, les appareils à résistance négative qui y sont connectés vont augmenter leur consommation de courant, ce qui va créer une charge supplémentaire sur le réseau et qui aura pour conséquence d'amplifier la chute de tension. Si les appareils électriques à apparence négative connectés au réseau électrique sont nombreux et puissants, la charge du réseau va augmenter de manière importante à chaque chute de tension. Le réseau électrique peut ainsi être entrainé vers le point critique où il devient instable et subit dans le pire des cas une avalanche de tension qui est une chute progressive et incontrôlable de la tension conduisant à l'arrêt du réseau électrique. L'augmentation du nombre d'appareils électriques à résistance apparente négative et de forte puissance, et leur concentration dans certaines zones géographiques (comme les zones urbaines) impliquera donc d'importants risques pour la stabilité du réseau qui peut devenir critique.

L'appareil électrique selon l'invention, qui est un appareil à résistance apparente négative, est apte à détecter une variation de la tension du réseau considérée comme une perturbation, c'est à dire conforme à la variation de tension prédéterminée. Cette variation de tension prédéterminée peut être toute caractéristique indiquant que, au vu de cette variation, le réseau peut être considéré comme subissant une perturbation, aussi bien une chute de tension qu'une hausse de tension. Lorsque cette variation de tension est détectée, l'appareil électrique selon l'invention passe en mode subsidiaire et se comporte alors comme un appareil à résistance apparente positive pendant un certain temps. Ainsi, l'appareil électrique ne contribue pas à l'augmentation de la variation de tension du réseau, voire même contribue à amortir cette variation de tension. Par exemple, en cas de chute de la tension du réseau électrique alimentant un appareil selon l'invention, ce dernier va diminuer sa consommation de courant, pendant la durée prédéterminée, au lieu de l'augmenter. Cet appareil, qui est normalement à résistance apparente négative, va ainsi soulager le réseau de manière à ne pas contribuer à la chute de tension.

Dans les appareils électriques à résistance apparente négative de l'art antérieur, l'appel de courant se produisant immédiatement en réponse à une chute de tension est le plus dommageable pour la stabilité du réseau car il entraine en plus des phénomènes d'oscillation. Pour l'appareil électrique selon l'invention, même si la durée du mode subsidiaire est brève (par exemple vingt secondes), elle permet d'atténuer avantageusement la contribution de l'appareil à la chute de tension du réseau, et notamment ces phénomènes d'oscillation.

Par ailleurs, pendant le mode subsidiaire, le courant consommé baisse en réponse à une chute de tension. L'appareil électrique selon l'invention va donc non seulement éviter de contribuer à la chute de tension, mais va en plus contribuer à la résorption de cette chute de tension. Le réseau électrique sera d'autant plus soulagé en matière d'appel de courant que la chute de tension sera importante.

Un appareil selon l'invention est donc apte, pendant le mode subsidiaire, à présenter un comportement amortisseur en réponse à une chute de tension du réseau électrique, en diminuant la puissance appelée ce qui aura pour effet de contribuer au relèvement du niveau de tension.

Dans le cas d'une hausse de tension, l'appareil selon l'invention aura le même comportement amortisseur, en augmentant le courant consommé en réponse à une hausse de tension. Ce cas peut être rencontré, par exemple, pour des réseaux électriques comportant une part significative de producteurs photovoltaïques.

Le comportement amortisseur de l'appareil selon l'invention est mis en oeuvre de manière autonome, c'est à dire que ce comportement amortisseur est déclenché directement en réponse à une variation de tension du réseau, sans la nécessité de recourir à la fourniture d'une information de commande qui serait issue du réseau ou d'un autre élément extérieur à l'appareil électrique. L'invention permet ainsi à chaque appareil à résistance apparente négative d'améliorer la stabilité du réseau spontanément et de manière décentralisée, et sans dépendre d'une information extérieure.

L'appareil électrique peut comporter les caractéristiques additionnelles suivantes, seules ou en combinaison :
- ladite durée prédéterminée comporte une première phase de maintien du courant constant, phase pendant laquelle l'appareil soulage la perturbation du réseau électrique ;
- la première phase a une durée minimale de 20 secondes, de manière à réduire les phénomènes d'oscillation induits par la variation de tension du réseau ;
- ladite durée prédéterminée comporte une deuxième phase de retour progressif au courant d'alimentation du consommateur de puissance électrique propre au mode nominal, de manière à fournir à nouveau au consommateur de puissance la puissance qui lui est nécessaire ;
- la deuxième phase a une durée minimale de 1 minute, pour contribuer efficacement à la stabilité en tension du réseau ;
- le dispositif de régulation subsidiaire comporte une modalité d'inactivité selon laquelle ladite durée prédéterminée ne comporte que la première phase et le retour en mode nominal est réalisé suite au retour de la tension du réseau électrique à son niveau d'avant ladite variation prédéterminée, cette modalité d'inactivité étant activée lorsque le consommateur de puissance tolère une baisse de puissance pendant de longues périodes ;
- le dispositif de régulation subsidiaire est adapté à réaliser le passage du mode nominal au mode subsidiaire en moins d'une seconde, cette vitesse de changement de mode permettant d'agir rapidement sur la variation de courant en réponse à une variation de tension du réseau, ce qui favorise l'impact positif de l'appareil sur la stabilité en tension du réseau ;
- ladite variation prédéterminée est : une vitesse de variation de la tension du réseau électrique qui est supérieure à une vitesse prédéfinie, et/ou une variation de la tension du réseau électrique au-delà d'un seuil de tension prédéfini ;
- le dispositif électronique de commande est un chargeur de batterie et le dispositif de régulation subsidiaire peut alors être adapté, durant le mode subsidiaire, à fournir un courant au réseau électrique, ce qui contribue à ramener plus rapidement le réseau électrique à sa tension initiale.

L'invention vise également un procédé de commande d'un appareil électrique à résistance apparente négative relié à un réseau électrique, comportant les étapes suivantes :
- alimenter à puissance constante ou à courant constant un consommateur de puissance électrique par un dispositif électronique de commande en fournissant au consommateur de puissance électrique un courant qui varie dans le sens inverse d'une variation de la tension du réseau électrique ;
- détecter une variation prédéterminée de la tension du réseau électrique ;
- piloter le dispositif électronique de commande pour alimenter le consommateur de puissance électrique avec un courant qui varie dans le même sens que la variation de la tension détectée du réseau électrique.

Le procédé peut avoir les mêmes caractéristiques additionnelles décrites ci-dessus pour l'appareil électrique, avec les mêmes avantages.

Un exemple préféré de réalisation de l'invention va maintenant être décrit en référence aux dessins annexés dans lesquels :
- la figure 1 est un schéma illustrant un appareil électrique selon l'invention ;
- la figure 2 est un graphique illustrant schématiquement le comportement d'un appareil à résistance apparente positive et d'un appareil à résistance apparente négative ;
- la figure 3 est un graphique illustrant le comportement de l'appareil de la figure 1 ;
- la figure 4 est un graphique représentant un premier scénario de variations de tension et d'intensité pour l'appareil de la figure 1 ;
- la figure 5 est un graphique représentant un deuxième scénario de variations de tension et d'intensité pour l'appareil de la figure 1 ;
- la figure 6 est un graphique illustrant le comportement de l'appareil de la figure 1, selon le premier scénario de la figure 4 ;
- la figure 7 est similaire à la figure 6, pour le deuxième scénario de la figure 5;
- la figure 8 est similaire à la figure 6, mais illustre le cas d'une hausse de tension ;
- la figure 9 est similaire aux figures 6 et 7, pour une variante de l'invention.

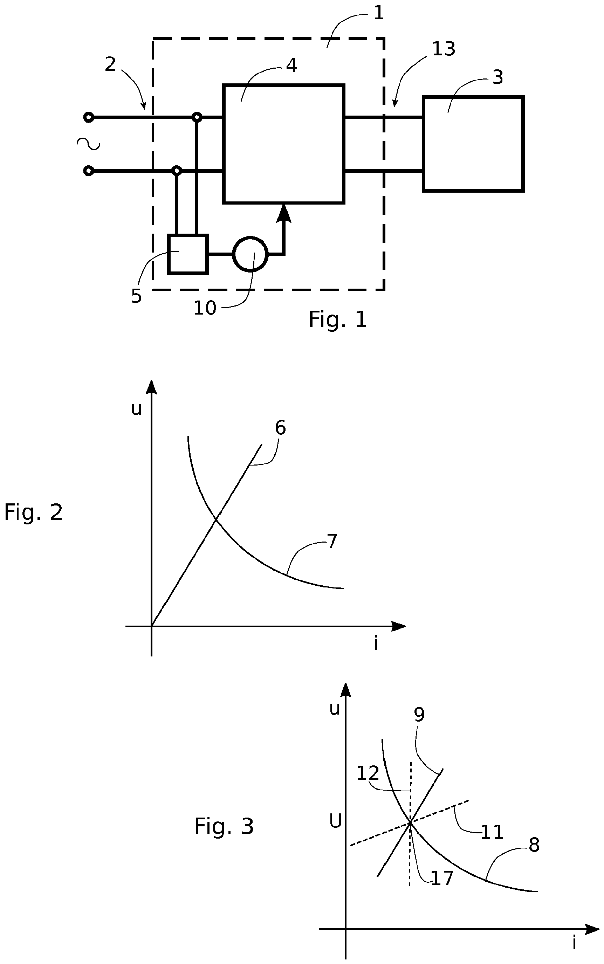

La figure 1 est un schéma de principe illustrant un appareil électrique 1 à résistance apparente négative, selon l'invention.

L'appareil électrique 1 comporte une entrée de puissance 2 pour son raccordement à un réseau électrique qui est, dans le présent exemple, un réseau électrique alternatif, et une sortie de puissance 13 pour son raccordement à un consommateur de puissance électrique 3. L'appareil 1 comporte un dispositif électronique de commande 4 apte à alimenter électriquement le consommateur de puissance 3 selon un mode qui lui est adapté, cette alimentation électrique se faisant, en mode nominal, à puissance constante ou à courant constant.

L'appareil électrique 1 et son consommateur de puissance 3 peuvent être, entre autres exemples :
- un ensemble onduleur et moteur industriel, le dispositif électronique de commande 4 étant un onduleur et le consommateur de puissance 3 étant un moteur électrique pour équipement industriel ;
- un appareil domestique à électronique de puissance, le dispositif électronique de commande 4 étant un onduleur et le consommateur de puissance 3 étant un moteur électrique de, par exemple, une pompe à chaleur, un climatiseur, un réfrigérateur, etc. ;
- un appareil électronique doté d'une alimentation à découpage, le dispositif électronique de commande 4 étant une alimentation à découpage et le consommateur de puissance 3 étant un appareil électronique tel que téléviseur ou ordinateur ;
- un ensemble chargeur et batterie, notamment de véhicule électrique, le dispositif électronique de commande 4 étant un chargeur de batteries muni d'une électronique de puissance pour la régulation de la charge, et le consommateur de puissance 3 étant une batterie ou un pack de batteries.

L'appareil électrique 1 comporte de plus un dispositif de détection 5 de tension adapté à détecter une variation prédéterminée de la tension du réseau électrique, et un dispositif de régulation subsidiaire 10.

L'appareil 1 a, en mode nominal, un comportement d'appareil à résistance électrique négative, c'est à dire qu'il alimente son consommateur de puissance 3 avec un courant constant ou avec une puissance constante. Lorsque le dispositif de détection 5 détecte une variation prédéterminée dans la tension du réseau, l'appareil 1 sort du mode nominal et passe en mode subsidiaire.

Le dispositif de détection 5 peut par exemple surveiller la tension efficace du réseau électrique (ou une grandeur représentative de cette tension efficace). La variation prédéterminée peut être tout comportement de la grandeur surveillée qui indiquerait qu'une perturbation du réseau a lieu. Cette variation prédéterminée peut par exemple être une vitesse de variation de la tension du réseau qui dépasse un certain seuil, à la hausse ou la baisse et/ou le passage de la tension du réseau en dessous d'un seuil de tension minimale déterminé ou au-dessus d'un seuil de tension maximale déterminé.

En mode subsidiaire, le dispositif de régulation subsidiaire 10 agit sur le dispositif électronique de commande 4 pour que l'alimentation électrique du consommateur de puissance 3 soit réalisée avec un courant qui varie dans le même sens que la variation de tension détectée. C'est à dire que si la tension du réseau chute, le courant fourni au consommateur de puissance 3 chute également, et si la tension de réseau augmente, le courant fourni au consommateur 3 augmente également. Autrement dit, en mode subsidiaire, l'appareil 1 a un comportement d'appareil à résistance électrique positive, et ce pendant une durée prédéterminée. Après cette durée prédéterminée, le mode fonctionnement nominal reprend et l'appareil 1 présente à nouveau un comportement d'appareil à résistance électrique négative.

La figure 2 est un graphique représentant, de manière théorique, le comportement de l'appareil à résistance électrique positive et d'un appareil à résistance électrique négative, et destiné à illustrer ces concepts. Ce graphique représente l'évolution de l'intensité i (en abscisses) et de la tension u (en ordonnées). Une première courbe 6 illustre le comportement d'un appareil à résistance apparente positive et une deuxième courbe 7 illustre le comportement d'un appareil à résistance apparente négative.

La courbe 6 illustrant l'appareil à résistance électrique positive est une droite représentant le travail à impédance constante. Ainsi, en suivant cette courbe 6, lorsque la tension du réseau baisse, l'intensité appelée par l'appareil baisse également, la puissance consommée baisse, et l'impédance reste constante. Pour différents ratios entre la variation de tension et la variation d'intensité, la droite 6 aura différentes pentes.

La courbe 7 illustrant l'appareil à résistance électrique négative est une courbe représentant le travail à une puissance souhaitée qui reste constante, ce qui est un exemple d'appareil à résistance apparente négative. Ainsi, en suivant cette courbe 7, lorsque la tension du réseau baisse, l'intensité appelée par l'appareil augmente, de sorte que le produit de la tension par l'intensité reste constant et égal à ladite puissance souhaitée. Pour différentes valeurs de la puissance souhaitée, la courbe 7 gardera le même profil mais sera positionnée ailleurs, et parallèlement à la courbe 7, dans le repère du graphique.

La figure 3 est un graphique illustrant schématiquement, sur le même principe que la figure 1, le comportement global de l'appareil 1 selon l'invention, en mode nominal et en mode subsidiaire.

En mode nominal, la relation entre la tension u du réseau et l'intensité i appelée par l'appareil 1 suit une courbe 8 qui est une courbe classique pour un appareil à résistance apparente négative, et qui est donc identique à la courbe 7 de la figure 2.

Cependant, lorsque l'appareil 1 passe en mode subsidiaire, par exemple au point de fonctionnement 17, l'appareil 1 change de comportement, et la relation entre la tension u du réseau et l'intensité i appelée devient une droite 9. Autrement dit, lorsque le dispositif de détection 5 de tension détecte ladite variation prédéterminée de la tension du réseau, la relation entre la tension du réseau (qui est donc en cours de variation) et l'intensité appelée suit alors la droite 9.

Par exemple, lorsqu'une chute de tension significative est détectée par le dispositif de détection 5, au niveau de la tension U correspondant au point de fonctionnement 17, la chute de tension se poursuivra donc en suivant la droite 9 vers le bas (et non la courbe 8) avec une chute concomitante de l'intensité appelée par l'appareil 1.

De même, lorsqu'une hausse de tension significative est détectée par le dispositif de détection 5, au niveau de la tension U, la hausse de tension se poursuivra donc en suivant la droite 9 vers le haut (et non la courbe 8) avec une hausse concomitante de l'intensité appelée par l'appareil 1.

Les paramètres de la droite 9 sont déterminés par la programmation ou la structure du dispositif de régulation subsidiaire 10. Sur la figure 3, la droite 9 est, à titre d'exemple, telle que le rapport U/I reste constant à partir du point de fonctionnement 17.

Le dispositif de régulation subsidiaire 6 permet ainsi d'alimenter le consommateur de puissance 3 avec un courant qui varie dans le même sens que la variation de tension détectée.

Alternativement à la droite 9, le dispositif de régulation subsidiaire 10 peut mettre en oeuvre une droite de pente différente en fonction des besoins. Par exemple, la droite du mode subsidiaire peut être une droite 11 de pente inférieure à celle de la droite 10, ou une droite 12 de pente supérieure à celle de la droite 10. Une pente supérieure procure un effet amortisseur inférieur sur la stabilité du réseau, et une pente inférieure procure un effet amortisseur supérieur sur la stabilité du réseau.

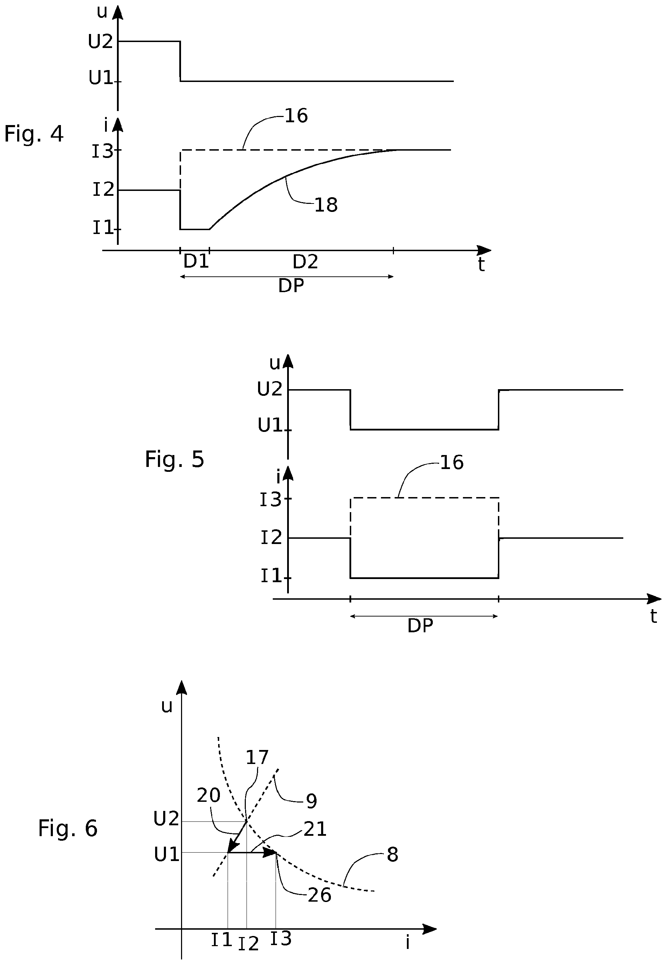

La figure 4 illustre un exemple de réalisation dans lequel l'appareil 1 travaille à puissance constante. Dans cet exemple, la figure 4 illustre la réponse de l'appareil 1 à une chute de tension. Le graphique montre en parallèle les variations de la tension u du réseau et les variations du courant appelé i par l'appareil 1, en fonction du temps et suivant la même échelle de temps t.

Dans l'exemple illustré, la courbe de la tension u montre que la tension du réseau est initialement constante à une valeur U2 et, suite à une perturbation du réseau, la tension chute à une valeur inférieure U1. La variation entre la tension U2 et la tension U1 est largement supérieure à la variation prédéterminée qu'est apte à détecter le dispositif de détection 5 de l'appareil 1. Ainsi, dès le début de la chute de tension, l'appareil 1 passe en mode subsidiaire.

La courbe du courant i, située en dessous, montre que, avant la perturbation, le courant consommé par l'appareil est constant à une valeur I2. L'appareil 1 est en mode nominal. La courbe en pointillés 16 montre le comportement en appel de courant qu'aurait eu l'appareil 1 s'il était resté en mode nominal après la perturbation : le dispositif électronique de commande 4 aurait augmenté le courant consommé à une valeur I3 pour maintenir la puissance absorbée constante. Au lieu de cela, dès que la chute de tension est détectée, l'appareil 1 passe en mode subsidiaire. Le dispositif de régulation subsidiaire 10 pilote alors le dispositif électronique de commande 4 pour que le courant consommé varie dans le même sens que la variation de la tension du réseau, c'est à dire, dans le présent exemple, pour que le courant consommé chute en réponse à la chute de la tension du réseau.

Après la perturbation du réseau, l'appareil 1 passe donc en mode subsidiaire ce qui entraine le courant à baisser à une valeur I1. L'intensité I1 du courant dépend de la pente de la droite caractéristique (9, 11, ou 12 sur la figure 3) du mode subsidiaire. Pour une même chute de tension (de U2 à U1) :
- plus la pente de cette droite 9, 11, ou 12 est élevée, plus I1 est élevée (c'est à dire plus la chute de courant entre I2 et I1 est faible), et donc moins l'effet amortisseur sur la stabilité du réseau sera important ;
- moins la pente de cette droite 9, 11, ou 12 est élevée, moins I1 est élevée (c'est à dire plus la chute de courant entre I2 et I1 est importante), et donc plus l'effet amortisseur sur la stabilité du réseau sera important.

Sur la figure 4, le courant I1 est consommé par l'appareil 1 pendant une première durée D1. Cette durée D1 correspond à la durée minimale de maintien de la chute du courant consommé pour participer positivement à la stabilité du réseau. La durée D1 est par exemple de 20 à 30 secondes, ce qui a au minimum un effet positif sur les phénomènes d'oscillation induits par une chute de tension du réseau. Pour un appareil 1 destiné à favoriser de manière plus importante la stabilité en tension du réseau, la durée D1 peut bien sûr être augmentée.

À la fin de la durée D1, le dispositif de régulation subsidiaire 10 pilote la régulation du courant consommé pour que ce dernier, à partir de la valeur I1 et pendant une durée D2, parcoure une courbe d'augmentation 18 pour rejoindre valeur de courant I3 qui correspond au fonctionnement à puissance constante du mode nominal. L'intensité I3 est donc telle que I3xU1=I2xU2.

En variante non illustrée, dans le cas d'un appareil 1 fonctionnant à courant constant, l'intensité i ne revient pas à I3 mais plutôt à I2.

A la fin de la durée D2, l'appareil 1 revient en mode nominal. La durée D2 peut par exemple être de l'ordre de quelques minutes. Durant la phase de la durée D2, la montée en tension est avantageusement progressive pour favoriser l'action positive sur la stabilité en tension du réseau, et notamment en n'introduisant pas de phénomènes d'oscillation.

La somme de la durée D1 et de la durée D2 est égale à la durée prédéterminée DP du mode subsidiaire, durée pendant laquelle le dispositif de régulation subsidiaire 10 alimente le consommateur de puissance 3 avec un courant qui a, dans un premier temps, chuté à la valeur I1, puis qui a rejoint la valeur I3, en réponse à la chute de tension de U2 à U1.

La durée prédéterminée DP est également la durée pendant laquelle l'appareil 1 ne va pas être alimenté à la puissance prévue, celle qui reste constante tant que l'appareil 1 est en mode nominal. En réponse à cette chute de tension, la puissance délivrée au consommateur de puissance 3 va donc être volontairement réduite, pendant la durée prédéterminée DP, en vue de contribuer à la stabilité du réseau électrique. Si de nombreux appareils à résistance apparente négative implémentant l'invention sont reliés à un même réseau électrique, tous ces appareils vont accepter, en cas de chute de tension, de réduire leur puissance consommée pendant une durée DP.

La durée prédéterminée DP est donc un compromis entre l'alimentation optimale de l'appareil 1 en puissance et la contribution à un réseau électrique stable en tension. La durée prédéterminée DP peut donc être modulée, au niveau de l'appareil 1, en fonction de ce qui est acceptable en termes de temps pendant lequel il est possible d'alimenter le consommateur de puissance 3 avec une puissance moindre, de même que le niveau d'abaissement de cette puissance (conditionnant la valeur I1). Pour une application jugée critique, la durée prédéterminée DP peut être réduite à une valeur minimale, par exemple de 1 minute (20s pour la durée D1 et 40s pour la durée D2). Pour une application jugée peu critique, la durée prédéterminée DP peut être allongée, par exemple, à plusieurs minutes. Le dispositif de régulation 10 peut même comporter une modalité d'inactivité qui, si elle est activée, permet de ne pas revenir à l'intensité I3 pour les applications les moins critiques, mais d'attendre le retour de la tension du réseau à son niveau initial, pour revenir plutôt à l'intensité I2.

La figure 5 illustre cette modalité d'inactivité qui peut être implémentée dans le dispositif de régulation 10. Une telle modalité d'inactivité peut, par exemple, se présenter sous la forme d'une touche ou d'un mode sélectionné par l'utilisateur de l'appareil 1 pour que ce dernier indique que l'application est peu critique. Par exemple, un véhicule électrique branché à un chargeur de batteries constitué par l'appareil 1, et dont on sait qu'il ne sera pas utilisé dans les prochains jours, pourra constituer une telle application peu critique. En effet, une perte de puissance dans la recharge du véhicule dans cette situation aura pour conséquence un allongement de la durée de recharge, mais comme le temps de recharge disponible est supérieur au temps effectif de la recharge, un allongement de la durée de recharge n'aura pas de conséquence négative. L'utilisateur pourra alors sélectionner sur le chargeur la modalité d'inactivité pour permettre le comportement illustré à la figure 5.

La figure 5 reprend le même exemple que celui de la figure 4 : un appareil électrique 1 travaillant à puissance constante et subissant une chute de la tension du réseau électrique. Cet exemple de la figure 5 illustre en plus le fait que cet appareil dispose d'une modalité d'inactivité que l'utilisateur a activée. Les éléments communs aux figures 4 et 5 ont été numérotés de la même manière.

La figure 5 illustre une chute de la tension du réseau de la valeur U2 à la valeur U1, puis, quelques minutes ou heures plus tard, un retour de la tension du réseau à la valeur initiale U2. En réponse à la chute de tension, détectée par le dispositif de détection 5, le dispositif de régulation 10, dont la modalité d'inactivité a été activée, commande donc une chute de courant de la valeur I2 à la valeur I1. Le courant consommé par l'appareil 1 est ensuite maintenu à la valeur I1 tant que durera la chute de tension. La durée prédéterminée DP est donc égale à la durée de la chute de tension. Lorsque la tension u revient à sa valeur initiale U2, le dispositif de détection 5 le détecte, et le dispositif de régulation 10 ramène parallèlement le courant i à sa valeur initiale I2.

La figure 6 est un graphique tiré du graphique de la figure 3 et qui représente en plus, sous forme de flèches, les variations de la tension u et du courant i qui sont relatives à l'exemple de la figure 4. Ainsi, la première flèche 20 est parcourue au moment de la chute de tension dans le réseau électrique et montre la chute de la tension U2 à la tension U1 et, parallèlement, la chute du courant consommé par l'appareil 1, de l'intensité I2 à I1. La première flèche part du point de fonctionnement 17. La deuxième flèche 21 est parcourue pendant la durée prédéterminée DP, et montre la hausse progressive du courant i, de l'intensité I1 à l'intensité I3. La deuxième flèche aboutit à un point de fonctionnement 26 correspondant à une même puissance que le point de fonctionnement 17, pour la tension U1.

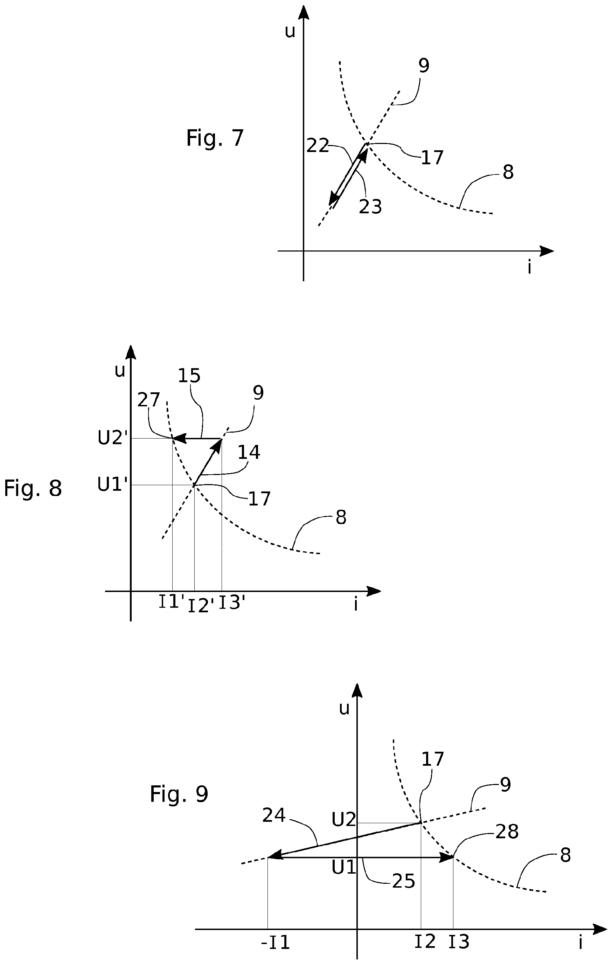

La figure 7 illustre de la même manière les variations e la tension u et du courant i relatives à l'exemple de la figure 5, c'est à dire lorsque la modalité d'inactivité a été activée. Dans ce cas, une première flèche 22 est également parcourue au moment de la chute de tension dans le réseau électrique et montre la chute de la tension U2 à la tension U1 et, parallèlement, la chute du courant consommé par l'appareil 1, de l'intensité I2 à I1. La deuxième flèche 23 montre en parallèle le retour à la tension U2 du réseau et le retour au courant I2, par le même chemin que celui de la première flèche 22. La deuxième flèche 23 revient au point de fonctionnement 17 initial.

Les exemples des figures 4 à 7 sont relatifs à un cas de chute de la tension du réseau électrique. Alternativement, dans des cas de hausse de tension, l'appareil 1 se comporte selon les mêmes règles et contribue également à la stabilité en tension du réseau, en mettant en oeuvre, dans ce cas de hausse de tension, une hausse du courant consommé en réponse à la hausse de tension.

La figure 8 illustre un exemple où le réseau électrique subit cette fois une hausse de tension. Une première flèche 14 est parcourue au moment de la hausse de tension dans le réseau électrique, en partant du point de fonctionnement 17, et montre la hausse de la tension U2' à la tension U3' et, parallèlement, la hausse du courant consommé par l'appareil 1, de l'intensité I2' à I3'. La deuxième flèche 15 est parcourue pendant la durée prédéterminée DP, et montre la baisse progressive du courant i, de l'intensité I3' à l'intensité I1'. La deuxième flèche abouti à un nouveau point de fonctionnement 27 correspondant à une même puissance que le point de fonctionnement 17, pour la tension U3'.

La figure 9 illustre, sur le même principe que les figures 6 et 7, une variante de l'invention. Selon cette variante, l'appareil 1 est un appareil électrique bidirectionnel qui est apte aussi bien à absorber qu'à fournir de l'énergie sur le réseau électrique. C'est le cas par exemple d'un chargeur de batteries bidirectionnel qui est apte à absorber de l'énergie sur le réseau électrique pour charger une batterie, et qui est apte également à prendre de l'énergie de la batterie pour la transmettre au réseau. Avec un tel appareil 1, cette variante prévoit que la chute du courant consommé en réponse à une chute de tension du réseau se poursuive, si l'état de charge de la batterie le permet, par une fourniture d'énergie au réseau. Sur la figure 9, une première flèche 24 montre la chute de tension du réseau d'une tension U2 à une tension U1 et en parallèle, la chute du courant i consommé par l'appareil 1 en réponse à cette chute de tension. Le courant i chute de I2 jusqu'à devenir nul puis deviens négatif, ce qui signifie sur ce graphique que le chargeur de batterie passe en mode de fourniture d'énergie au réseau à partir de la batterie. L'appareil 1 va donc jusqu'à fournir un courant I1 allant dans le sens contraire du courant I2. La deuxième flèche 25 est parcourue pendant la durée prédéterminée DP, et montre l'arrêt de la fourniture de courant au réseau, et l'augmentation progressive de la consommation de courant, jusqu'à un nouveau point de fonctionnement 28.

La stabilité en tension du réseau est ici encore améliorée car l'effet d'amortissement d'une chute de tension est complété par une phase de fourniture d'énergie au réseau, ce qui permet un retour plus rapide à la tension de réseau avant la perturbation.

En reprenant l'exemple évoqué plus haut d'un parc de nombreux chargeurs de véhicules électriques connectés à un même réseau électrique pour charger des batteries de forte puissance, la mise en oeuvre de l'invention selon cette variante aurait un impact positif encore plus grand sur la stabilité du réseau avec, en cas de chute de tension, non seulement d'importants consommateurs de courant qui diminuent leur appel en courant jusqu'à les annuler, mais avec en plus une fourniture de courant qui soulage d'autant plus le réseau électrique, et ce de manière autonome pour chaque appareil, sans la nécessité d'une consigne extérieure ou d'une coordination.

De même que précédemment, le comportement de l'exemple de la figure 9, qui est relatif à une chute de tension, peut être mis en oeuvre dans le cas d'une hausse de tension. Dans ce cas, lorsque le chargeur de batterie est en train de fournir un courant au réseau et est en mode nominal, en cas de hausse de tension du réseau, le chargeur diminue l'intensité fournie et va jusqu'à absorber du courant sur le réseau en rechargeant la batterie pour contribuer au retour du réseau à la tension initiale.

D'autres variantes de réalisation de l'appareil électrique peuvent être mises en oeuvre sans sortir du cadre de l'invention. Les différents modes de réalisation décrits peuvent par exemple être combinés.

Par ailleurs, l'appareil électrique 1 selon l'invention peut être réalisé de diverses manières.

Par exemple, le dispositif électronique de commande 4 et le dispositif de détection 5 peuvent être réalisés par des composants électroniques analogiques, et le dispositif de régulation 10 peut alors être réalisé également par des composants électroniques analogiques modifiant, lors du passage en mode subsidiaire, les entrées du dispositif électronique de commande 4 pour modifier son comportement conformément au mode subsidiaire.

Selon un autre exemple, le dispositif électronique de commande 4 peut être réalisé par un microcontrôleur contrôlant des composants de puissance. Le dispositif de détection 5 et le dispositif de régulation subsidiaire peuvent alors être implémentés dans la programmation du microcontrôleur.

## Revendications

1. Appareil électrique (1) à résistance apparente négative comportant :
- une entrée de puissance (2) pour sa liaison à un réseau électrique ;
- une sortie de puissance (13) pour sa liaison à un consommateur de puissance électrique (3) ; et
- un dispositif électronique de commande (4) adapté à alimenter à puissance constante ou à courant constant le consommateur de puissance électrique (3) selon un mode nominal, le dispositif électronique de commande (4) fournissant au consommateur de puissance électrique (3) un courant qui varie dans le sens inverse d'une variation de la tension du réseau électrique ;
**caractérisé en ce qu'**il comporte :
- un dispositif de détection de tension (5) adapté à détecter une variation prédéterminée de la tension du réseau électrique ;
- un dispositif de régulation subsidiaire (10) qui est adapté, lorsque le dispositif de détection (5) détecte ladite variation, à piloter le dispositif électronique de commande (4) dans un mode subsidiaire pour alimenter le consommateur de puissance électrique (3) avec un courant qui varie dans le même sens que la variation de la tension détectée du réseau électrique.

2. Appareil selon la revendication 1, **caractérisé en ce que** le dispositif de régulation subsidiaire (10) est adapté, après l'alimentation du consommateur de puissance électrique (3) avec un courant qui varie dans le même sens que la variation de la tension détectée, à maintenir le mode subsidiaire pendant une durée prédéterminée (DP).

3. Appareil selon la revendication 2, **caractérisé en ce que** ladite durée prédéterminée comporte une première phase (D1) de maintien du courant constant.

4. Appareil selon la revendication 3, **caractérisé en ce que** la première phase (D1) a une durée minimale de 20 secondes.

5. Appareil selon l'une des revendications 3 ou 4, **caractérisé en ce que** ladite durée prédéterminée (DP) comporte une deuxième phase (D2) de retour progressif au courant d'alimentation du consommateur de puissance électrique (3) propre au mode nominal.

6. Appareil selon la revendication 5, **caractérisé en ce que** la deuxième phase (D2) a une durée minimale de 1 minute.

7. Appareil selon l'une des revendications 5 ou 6, **caractérisé en ce que** le dispositif de régulation subsidiaire comporte une modalité d'inactivité selon laquelle ladite durée prédéterminée (DP) ne comporte que la première phase (D1) et le retour en mode nominal est réalisé suite au retour de la tension du réseau électrique à son niveau d'avant ladite variation prédéterminée.

8. Appareil selon l'une quelconque des revendications précédentes, **caractérisé en ce que** le dispositif de régulation subsidiaire est adapté à réaliser le passage du mode nominal au mode subsidiaire en moins d'une seconde.

9. Appareil selon l'une quelconque des revendications précédentes, **caractérisé en ce que** ladite variation prédéterminée est une vitesse de variation de la tension du réseau électrique qui est supérieure à une vitesse prédéfinie.

10. Appareil selon l'une quelconque des revendications précédentes, **caractérisé en ce que** ladite variation prédéterminée est une variation de la tension du réseau électrique au-delà d'un seuil de tension prédéfini.

11. Appareil selon l'une quelconque des revendications précédentes, **caractérisé en ce que** le dispositif électronique de commande (4) est un chargeur de batterie.

12. Appareil selon la revendication précédente, **caractérisé en ce que** le dispositif de régulation subsidiaire (10) est adapté, durant le mode subsidiaire, à fournir un courant au réseau électrique.

13. Procédé de commande d'un appareil électrique (1) à résistance apparente négative relié à un réseau électrique, comportant l'étape suivante :
- alimenter à puissance constante ou à courant constant un consommateur de puissance électrique (3) par un dispositif électronique de commande (4) en fournissant au consommateur de puissance électrique (3) un courant qui varie dans le sens inverse d'une variation de la tension du réseau électrique ;
**caractérisé en ce qu'**il comporte en outre les étapes suivantes :
- détecter une variation prédéterminée de la tension du réseau électrique ;
- piloter le dispositif électronique de commande (4) pour alimenter le consommateur de puissance électrique (3) avec un courant qui varie dans le même sens que la variation de la tension détectée du réseau électrique.
